# EUROPÄISCHE PATENTSCHRIFT

(11) **EP 0 724 613 B1**
(45) Veröffentlichungstag und Bekanntmachung des Hinweises auf die Patenterteilung: **20.02.2002**
(21) Anmeldenummer: 94928891.4
(22) Anmeldetag: 12.10.1994
(51) Int. Cl.: C08G 63/48, C08G 69/26, C08G 18/36

(54) **BINDEMITTEL AUF BASIS FETTCHEMISCHER REAKTIONSPRODUKTE**
BINDERS BASED ON FAT CHEMICAL REACTION PRODUCTS
LIANT A BASE DE PRODUITS DE REACTION CHIMIQUE DE GRAISSES

(30) Priorität: 20.10.1993 DE 4335672; 31.08.1994 DE 4430875
(43) Veröffentlichungstag der Anmeldung: 07.08.1996
(73) Patentinhaber: Henkel Kommanditgesellschaft auf Aktien, 40191 Düsseldorf (DE)
(72) Erfinder: KLAUCK, Wolfgang, D-40670 Meerbusch (DE); RUST, Ernst-Ulrich, D-51467 Berg.-Gladbach (DE); WILLEKE, Ludger, D-46117 Oberhausen (DE); DAUTE, Peter, D-45127 Essen (DE); KLEIN, Johann, D-40233 Düsseldorf (DE); STRUVE, Alfred, D-40723 Hilden (DE)
(86) Internationale Anmeldenummer: EP9403351
(87) Internationale Veröffentlichungsnummer: WO9511284

(56) Entgegenhaltungen:
- EP-A- 0 152 585
- EP-A- 0 256 467
- WO-A-91/00305
- WO-A-91/01980
- WO-A-91/02016
- FR-A- 1 132 976
- GB-A- 907 782
- GB-A- 988 738

## Beschreibung

Die Erfindung betrifft die Verwendung von fettchemischen Reaktionsprodukten, insbesondere deren Verwendung in Bindemitteln zum Beschichten, Dichten, Gießen und Binden.

Unter "Bindemittel" sollen solche Produkte verstanden werden, die gleich- oder verschiedenartige Substrate verbinden oder selbst darauf fest haften können. Sie basieren in der Regel auf Stoffen oder Stoffgemischen, die chemisch und/oder physikalisch abbinden. Neben anorganischen Stoffen spielen vor allem organische Stoffe eine bedeutende Rolle und hier wiederum synthetische hochmolekulare Verbindungen, wobei das hohe Molekulargewicht auch stufenweise erreicht werden kann. Diese Stoffe werden in der Regel durch Zusätze so modifiziert, daß sie zum Kleben, Beschichten, Dichten und Gießen besser geeignet sind. Derartige Zusätze sind z. B. Harze, Weichmacher, Lösungsmittel, Füllstoffe, Pigmente, Beschleuniger, Stabilisatoren und Dispergiermittel. Auf derartig modifiziertem Bindemittel basieren also die Klebstoffe, Dichtmassen, Beschichtungsmittel oder Gießharze.

Die bedeutendste Basis für Bindemittel sind also synthetische Polymere, z. B. Polyacrylate, Polyvinylacetate, Polyamide, Polyisobuten, Polyvinylether, Polyurethane, Styrol/Butadien-Copolymere, Ethylen/Vinylacetat-Copolymere, Polyvinylchlorid, Phenol-Harze usw.

Alle obengenannten Polymere haben jedoch den Nachteil, daß sie weitgehend auf Bausteinen petrochemischen Ursprungs basieren, also letztlich von Erdöl oder Erdgas abstammen. Die mehrstufigen Reaktionsschritte, die zur Herstellung dieser Bausteine benötigt werden, sind aufwendig und belasten somit die Umwelt. Derartige Dispersionen tragen also zu einem verstärkten Abbau der Erdöl- und Gasvorkommen bei und belasten wegen ihrer schlechten biologischen Abbaubarkeit weiterhin Gewässer und Deponien.

Aus diesem Grund gibt es Bemühungen, Polymere auf der Basis von Fetten und Ölen bereitzustellen. So werden in der WO 91/00305 Kunststoffe beschrieben, die durch Reaktion von ungesättigten und/oder hydroxylgruppenhaltigen Fettsäuren oder deren Estern mit bifunktionellen Ester- und/oder Amid-bildenden Verbindungen sowie anschließende Umsetzung der erhaltenen difunktionellen Monomerbausteine mit einer zweiten bifunktionellen Verbindung erhalten werden. Da nur bifunktionelle Verbindungen hergestellt und eingesetzt werden, erhält man lineare Polymere, die schmelz- und formbar sind. So wurde eine Folie bei 200 °C hergestellt, die zum Verkleben von zwei Glasplatten bei 190 °C verwendet wurde.

Es wurde auch eine wäßrige Dispersion von Polymeren auf der Basis von Fetten und Ölen beschrieben. Es handelt sich dabei um die DE 43 05 309. Danach wird ein ionisches Polymer aus mehrwertigen Metallionen und Carbonsäuren hergestellt, die auf Fetten oder Ölen basieren. Die Carbonsäuren sind ein- bis zehnwertig und haben ein Molekulargewicht Mn von vorzugsweise mehr als 400. Derartige Carbonsäuren werden durch Metall-Ionen wie Ca, Mg, Zn, Zr, Se, Al und Ti über ionische Bindungen in der Hauptkette miteinander verbunden. Diese ionischen Polymere können auch zu wäßrigen Dispersionen weiterverarbeitet werden. Ihre Nachteile sind: All die Eigenschaften, die durch ein gewisses Dissoziationsgleichgewicht der ionischen Gruppen in der Hauptkette verursacht werden, wie z.B. die Neigung zum Fließen der getrockneten Filme unter Belastung oder erhöhter Temperatur, eine Eigenschaft, die dem Fachmann unter "kaltem Fluß" geläufig ist.

In der WO 9101980 wird ein Verfahren zur Herstellung von duroplastischen Kunststoffen aus rohen Fetten und Ölen beschrieben. Von wäßrigen Dispersionen und ihrer Verwendung als Bindemittel ist keine Rede.

In der EP 152585 wird ein zweikomponentiger Polyurethan-Klebstoff beschrieben, bei dem eine Komponente ein oleochemisches Polyol darstellt. Von einem einkomponentigen Bindemittel in Form einer Dispersion ist keine Rede.

In der EP 256467 werden niedermolekulare Polykondensate aus Doppelbindungen enthaltenden Fettsäuren und Polyolen bzw. Aminen sowie deren Verwendung als lösendes Vehikel für Harze in wäßrigen Klebstoff-Dispersionen beschrieben. Es wird nicht vorgeschlagen, sie als Bindemittel selbst zu verwenden. Das ist auch nicht möglich, da sie nicht fest werden.

In der GB 907782 wird die Herstellung einer wäßrigen Zusammensetzung beschrieben, wobei ungesättigte Dicarbonsäuren und ungesättigte Fettsäuren mit Di- oder Polyaminen neutralisiert werden. Nach dem Erhitzen werden harte, wasser- sowie wetterfeste Einbrennlacke erhalten.

Aufgabe der Erfindung war es deshalb, Bindemittel auf Basis von Fetten und Ölen herzustellen, die nicht nur aus Gründen der besseren Umweltverträglichkeit, sondern auch wegen des ausreichend hohen Leistungsspektrums bei wettbewerbsfähigem Preisniveau überzeugen, insbesondere wegen des besonders hohen Anfangstack (bzw. Oberflächentack), der einfachen Herstellung und der guten biologischen Abbaubarkeit, die sich mit derartigen Bindemitteln realisieren lassen.

Die erfindungsgemäße Lösung ist den Patentansprüchen zu entnehmen. Sie besteht in erster Linie darin, Reaktionsprodukte als Bindemittel in einer wäßrigen Dispersion zu verwenden, die durch eine Reaktion von A) mindestens einem Fettstoff mit durchschnittlich 1 bis 10, bevorzugt 1,5 bis 6, von mindestens einer der folgenden funktionellen Gruppen -OH, -SH,-NH2, -C = C-, -COOH, Säureanhydrid-Gruppe oder einer Epoxidgruppe in dem Fettrest, wobei der Fettstoff mindestens 1 Mol% an mindestens dreifunktionellen Fettstoffen enthält, mit B) mindestens einer ein- oder mehrfunktionellen Verbindung, die zur Reaktion mit den funktionellen Gruppen der Fettstoffe fähiq ist. erhalten wurden.

Die Reaktionsprodukte haben ein durchschnittliches Molekulargewicht Mn (osmotisch bestimmtes Zahlenmittel) von mindestens 1 500, insbesondere von mindestens 5 000 und vorzugsweise für bestimmte Anwendungen mindestens 8 000. Das Molekulargewicht kann nach der Reaktion und vor der Anwendung des Bindemittels noch vergrößert werden, z. B. nachdem das Bindemittel dispergiert wurde. Die Molekulargewichtserhöhung kann auch zu einer leichten Vernetzung führen, wobei das Bindemittel aber bei der Applikation noch gießfähig oder zumindest formbar bleibt. Die Applikation erfolgt zwischen 0 und 250 °C, insbesondere zwischen 20 und 150 °C. Dabei ist das Bindemittel noch quellbar. Das Molekulargewicht wird insbesondere nach Zusatz von Reaktivsystemen erhöht, z. B. nach Zusatz von Radikalstartern, wie Benzoylperoxid, oder nach Zusatz von Härtern, wie Epoxidharze, Polyisocyanate und Polyamine.

Unter "Fettstoffen" sind Fettsäuren, Fettalkohole und deren Derivate zu verstehen, wenn sie mindestens eine der folgenden funktionellen Gruppen -OH, -SH, -NH2, -C = C-, -COOH, Säureanhydrid-Gruppe oder Epoxidgruppen in dem Fettrest enthalten. Bei dem Fettstoff handelt es sich nicht um einen einheitlichen Stoff, sondern vielmehr um eine Mischung. Das gilt insbesondere für die Funktionalität. Mindestens 1 % der Fettstoff-Moleküle haben mindestens 3 funktionelle Gruppen gleicher oder verschiedener Art, vorzugsweise mindestens 3 %. Es ist dem Fachmann bekannt, wie weit er die Umsetzung führen darf, um dennoch nur eine Verzweigung der Moleküle bzw. allenfalls eine so leichte Vernetzung zu bekommen, daß die Reaktionsprodukte noch verformbar sind. Vorzugsweise werden Fettstoffe mit einer Molmasse (Zahlenmittel) > 300 bzw. oligomerisierte Fettstoffe mit einer Molmasse > 800 eingesetzt. Im allgemeinen ist das Molekulargewicht > 200.

Die Fettstoffe sind lipophil.

Unter "Fettsäuren" werden Säuren verstanden, die eine oder mehrere Carboxyl-Gruppen (-COOH) enthalten. Die Carboxyl-Gruppen können mit gesättigten, ungesättigten, unverzweigten oder verzweigten Alkyl-Resten mit mehr als 8, insbesondere mehr als 12 C-Atomen verbunden sein. Sie können neben den oben beschriebenen -OH, -SH, -C = C-, -COOH, Amino-, Säureanhydrid-Gruppen oder Epoxidgruppen weitere Gruppen wie Ether-, Ester-, Halogen-, Amid-, Amino-, Urethan- und Harnstoffgruppen enthalten. Bevorzugt werden jedoch Carbonsäuren wie native Fettsäuren oder Fettsäuregemische, Dimerfettsäuren und Trimerfettsäuren. Konkrete Beispiele für die erfindungsgemäß zu verwendenden Fettsäuren sind neben den gesättigten insbesondere die ein- oder mehrfach ungesättigten Säuren Palmitolein-, Öl-, Elaidin-, Petroselin-, Eruca-, Ricinol-, Hydroxymethoxystearin-, 12-Hydroxystearin-, Linol-, Linolen- und Gadoleinsäure.

Neben den in der Natur vorkommenden Fettsäuren können auch Polyhydroxyfettsäuren eingesetzt werden. Diese können z.B. durch Epoxidation ungesättigter Fette und Öle oder Ester von Fettsäuren mit Alkoholen, Ringöffnung mit H-aktiven Verbindungen wie z.B. Alkoholen, Aminen und Carbonsäuren und anschließende Verseifung hergestellt werden. Die als Ausgangsmaterial benötigten Fette oder Öle können sowohl pflanzlichen als auch tierischen Ursprungs sein oder gegebenenfalls gezielt auf petrochemischem Weg synthetisiert werden.

Die Fettsäuren können auch von Öl- und Fett-basierten Rohstoffen abgeleitet sein, wie sie z.B. durch En-Reaktionen, Diels-Alder-Reaktionen, Umesterungen, Kondensationsreaktionen, Pfropfung (z.B. mit Maleinsäureanhydrid oder Acrylsäure usw.) und Epoxidierungen zugänglich sind. Als Beispiele hierfür seien genannt: a) Epoxide ungesättigter Fettsäuren wie Palmitolein-, Öl-, Elaidin-, Petroselin-, Eruca-, Linol-, Linolen, Gadoleinsäure, b) Umsetzungsprodukte ungesättigter Fettsäuren mit Maleinsäure, Maleinsäureanhydrid, Methacrylsäure oder Acrylsäure, c) Kondensationsprodukte von Hydroxycarbonsäuren wie Ricinolsäure oder 12-Hydroxystearinsäure und Polyhydroxycarbonsäuren.

Nicht alle der oben beschriebenen Fettsäuren sind bei Raumtemperatur stabil. Falls notwendig, können daher für die erfindungsgemäße Verwendung Derivate der obengenannten Fettsäuren wie Ester oder Amide eingesetzt werden.

In einer bevorzugten Ausführungsform der Erfindung werden Ester oder Partialester der obengenannten Fettsäuren mit ein- oder mehrwertigen Alkoholen verwendet. Unter "Alkoholen" sind Hydroxyl-Derivate von aliphatischen und alicyclischen gesättigten, ungesättigten, unverzweigten oder verzweigten Kohlenwasserstoffen zu verstehen. Hierzu gehören neben einwertigen Alkoholen auch die aus der Polyurethan-Chemie an sich bekannten niedermolekularen Kettenverlängerungsmittel bzw. Vernetzer mit Hydroxylgruppen. Konkrete Beispiele aus dem niedermolekularen Bereich sind Methanol, Ethanol, Propanol, Butanol, Pentanol, Decanol, Octadecanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethylcyclohexan, Guerbetalkohol, 2-Methyl-1,3-Propandiol, Hexantriol-(1,2,6), Glycerin, Trimethylolpropan, Trimethylolethan, Pentaerythrit, Sorbit, Formit, Methylglycosid, Butylenglykol, die zu Alkoholen reduzierten Dimer- und Trimer-Fettsäuren. Monophenylglykol oder von Kollophoniumharzen abgeleitete Alkohole wie Abietylalkohol können ebenfalls für die Veresterung verwendet werden.

Anstelle der Alkohole können auch OH-haltige tertiäre Amine, Polyglycerin oder teilweise hydrolysierte Polyvinylester verwendet werden.

Die Veresterung mit Alkoholen kann auch unter Zusatz von gesättigten und verzweigten Fettsäuren wie Capron-, Capryl-, Caprin-, Laurin-, Myristin-, Palmitin-, Stearin-, Isostearin-, Isopalmitin-, Arachin-, Behen-, Cerotin- und Melissin-Säuren durchgeführt werden. Außerdem können zur Oligomerisierung Polycarbonsäuren oder Hydroxycarbonsäuren zugestzt werden. Beispiele hierfür sind Oxalsäure, Malonsäure, Bernsteinsäure, Maleinsäure, Fumarsäure, Glutarsäure, Adipinsäure, Korksäure, Sebacinsäure, 1,11-Undecandisäure, 1,12-Dodecandisäure, Phthalsäure, Isophthalsäure, Terephthalsäure, Hexahydrophthalsäure, Tetrahydrophthalsäure oder Dimerfettsäure, Trimerfettsäure, Zitronensäure, Milchsäure, Weinsäure, Ricinolsäure, 12-Hydroxystearinsäure. Bevorzugt wird Adipinsäure verwendet.

Beispiel für erfindungsgemäß zu verwendende Ester sind neben den teilweise verseiften Fetten, wie Glycerinmonostearat, vorzugsweise die natürlichen Fette und Öle von Raps (neu), Sonnenblumen, Soja, Lein, Ricinus, Kokosnüssen, Ölpalmen, Ölpalmkernen und Ölbäumen und deren Methylester. Bevorzugte Fette und Öle sind z.B. Rindertalg mit einer Kettenverteilung von 67 % Ölsäure, 2 % Stearinsäure, 1 % Heptadecansäure, 10 % gesättigte Säuren der Kettenlänge C12 bis C16, 12 % Linolsäure und 2 % gesättigte Säuren mit > C18 Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Selbstverständlich können z.B. auch die entsprechenden Epoxide und Umsetzungsprodukte mit Maleinsäureanhydrid verwendet werden. Weitere Beispiele sind partiell und vollständig dehydratisiertes Ricinöl, partiell acetyliertes Ricinusöl, Ringöffnungsprodukte von epoxydiertem Sojaöl mit Dimerfettsäure.

Vorzugsweise werden Fettsäureester und ihre Ober Epoxidation zugänglichen Derivate verwendet. Als Beispiel für derartige Fettsäuren seien genannt: Sojafettsäuremethylester, Leinölfettsäuremethylester, Ricinolsäuremethylester, Epoxystearinsäuremethylester, Epoxystearinsäure-2-ethylhexylester. Von den Glyceriden werden die Triglyceride bevorzugt, z.B. Rüböl, Leinöl, Sojaöl, Ricinusöl, partiell und vollständig dehydratisierte Ricinusöle, partiell acetyliertes Ricinusöl, Sojaölepoxid, Leinölepoxid, Rübölepoxid, epoxidiertes Sonnenblumenöl.

In einer weiteren bevorzugten Ausführungsform der Erfindung können mit Nucleophilen ringgeöffnete epoxidierte Triglyceride ungesättigter Fettsäuren eingesetzt werden. Unter Nucleophilen sind Alkohole wie z.B. Methanol, Ethanol, Ethylenglykol, Glycerin oder Trimethylolpropan, Amine wie z.B. Ethanolamin, Diethanolamin, Triethanolamin, Ethylendiamin oder Hexamethylendiamin oder Carbonsäuren wie z.B. Essigsäure, Dimerfettsäure, Maleinsäure, Phthalsäure oder ein Gemisch von Fettsäuren mit 6 bis 36 C-Atomen zu verstehen.

Zweckmäßigerweise werden jedoch Fette und Öle (Triglyceride) sowohl in nativer Form als auch nach thermischer und/oder oxidativer Behandlung bzw. die über Epoxidation oder über die Addition von Maleinsäureanhydrid bzw. Acrylsäure zugänglichen Derivate eingesetzt. Konkrete Beispiele sind: Palmöl, Erdnußöl, Rüböl, Baumwollsaatöl, Sojaöl, Ricinusöl, partiell und vollständig dehydratisierte Ricinusöle, partiell acetylierte Ricinusöle, Sonnenblumenöl, Leinöl, Standöle, geblasene Öle, epoxidiertes Sojaöl, epoxidiertes Leinöl, Rapsöl, Kokosöl, Palmkernöl und Talge. Nach der Modifikation sollten noch mindestens 50, insbesondere mindestens 80 Gew.-% an Fettstoffen mit der Triglyceridstruktur vorhanden sein.

Als Derivate können auch Amide der obengenannten Fettsäuren verwendet werden. Diese können durch Umsetzung mit primären und sekundären Aminen oder Polyaminen erhalten werden, z.B. mit Monoethanolamin, Diethanolamin, Ethylendiamin, Hexamethylendiamin, Ammoniak etc..

Unter "Fettalkoholen" werden Verbindungen verstanden, die eine oder mehrere Hydroxylgruppen enthalten. Die Hydroxylgruppen können mit gesättigten, ungesättigten, unverzweigten oder verzweigten Alkylresten mit mehr als 8, insbesondere mehr als 12 C-Atomen verbunden sein. Sie können neben den für die spätere Oligomerisierung notwendigen -SH, -C = C-, -COOH, Amino- Säureanhydrid-Gruppen oder Epoxidgruppen weitere Gruppen enthalten, z.B Ether-, Ester-, Halogen-, Amid-, Amino-, Harnstoff- und Urethan-Gruppen. Konkrete Beispiele für die erfindungsgemäß zu verwendenden Fettalkohole sind: Ricinoleylalkohol, 12-Hydroxystearylalkohol, Oleylalkohol, Erucylalkohol, Linoleylalkohol, Linolenylalkohol, Arachidylalkohol, Gadoleylalkohol, Erucylalkohol, Brassidylalkohol, Dimerdiol (= Hydrierungsprodukt des Dimerfettsäuremethylesters).

Als Derivate der Fettalkohole können symmetrische und unsymmetrische Ether und Ester mit Mono- und Polycarbonsäuren eingesetzt werden. Unter Monocarbonsäuren versteht man Ameisen-, Essig-, Propion-, Butter-, Valerian-, Capron-, Önanth-, Capryl-, Pelargon-, Caprin-, Undecan-, Laurin-, Tridecan-, Myristin-, Pentadecan-, Palmitin-, Margarin-, Stearin-, Nonadecan-, Arachin-, Behen-, Lignocerin-, Cerotin- und Melissinsäure. Polycarbonsäuren sind z.B. Oxalsäure, Adipinsäure, Maleinsäure, Weinsäure und Zitronensäure. Gleichzeitig können als Carbonsäure auch die oben beschriebenen Fettsäuren eingesetzt werden, wie z. B. Ölsäureoleylester.

Die Fettalkohole können auch verethert sein, insbesondere mit gleichen oder anderen Fettalkoholen, aber auch mit anderen mehrwertigen Alkoholen, z.B. Alkylpolyglykoside, Dioleylether, Dimerdiolether, Diepoxydistearylether, Oleyl-Butyl-Ether.

Natürlich können auch Gemische obiger Fettstoffe zugesetzt werden.

Im Falle von ungesättigten Fettstoffen ist es unter Umständen zweckmäßig, Sikkative in Mengen von 1 bis 5 Gew.-%, bezogen auf den Fettstoff zuzusetzen. Konkrete Beispiele sind Naphthenate, Octoate, Linoleate oder Resinate von Co, Mn, Pb oder deren Mischungen.

Unter "ein oder mehrfunktionellen Verbindungen, die zur Reaktion mit den funktionellen Gruppen der Fettstoffe fähig sind" (Komponente B), sind vor allem mindestens eine der folgende Verbindungen zu verstehen: Vinylester, (Meth)acrylsäurester mit bis zu 18 C-Atomen in der Alkoholkomponente, Ethylen, Styrol, Butadien, Acrylnitril, Vinylchlorid, mehrwertige Alkohole, Polyamine, Aminoalkohole, Polymercaptane, Aminomercaptane, Alkoholmercaptane, Aminosäuren, Hydroxysäuren, Mercaptansäuren, Polycarbonsäuren - auch höhermolekulare wie z.B. Dimerfettsäuren - Säureanhydride, Polyepoxide und Poly-Säurechloride, alle aliphatischen und aromatischen, insbesondere difunktionelle Isocyanate und daraus hergestellte NCO-endständige kurzkettige Prepolymere (Mw <8000). Im allgemeinen beträgt das Molekulargewicht der Komponente B) weniger als 2 000 (Zahlenmittel).

Der Anteil der Komponente B beträgt höchstens 80, vorzugsweise höchstens 50 Gew.-%, bezogen auf das Gewicht der Komponenten A und B zusammen. Entscheidend ist jedoch das Äquivalenz-Verhältnis der funktionellen Gruppen der Komponente A) und der Komponente B). Die Komponenten A) und B) werden aber nach inniger Mischung nur soweit umgesetzt, daß zunächst noch verformbare Reaktionsprodukte erhalten werden, die über weitere Vernetzung auch in duroplastische Produkte umgewandelt werden können.

Bei der Reaktion entstehen mehr oder weniger verzweigte Makromoleküle bzw. Polymere, worunter auch Oligomere zu verstehen sind. Es handelt sich dabei um die bekannte Reaktion zum Aufbau von Polymeren, also Polyadditionen, Polykondensationen und Polymerisationen. Insbesondere handelt es sich um Umesterungen, Kondensationsreaktionen, Enreaktionen, Pfropfungen (z.B. mit Maleinsäureanhydrid und anschließender Kettenverlängerung mit Polyolen oder Polyaminen) und Ringöffnung von Epoxidgruppen. Dabei bleibt die Molekülstruktur des Triglycerides der Öle und Fette weitgehend erhalten. Sie kann aber auch teilweise durch Umesterung oder Umamidierung verlorengehen bzw. durch derartige Reaktionen gezielt verändert werden.

Es ist wesentlich, daß die Polyreaktion zu Reaktionsprodukten mit einem durchschnittlichen Molekulargewicht MG von mindestens 1 500 führt, insbesondere mindestens 5 000 (ermittelt nach GPC). Andererseits darf aber das Reaktionsprodukt in der Schmelze noch nicht gelieren. Für die spätere Dispergierung in Wasser bei erhöhter Temperatur ist nämlich ein gewisses Fließverhalten erforderlich. Dieses kann allerdings durch Zugabe von äußeren Emulgatoren oder sonstigen Additiven wie z.B. Weichmachern in die Polymerschmelze verbessert werden.

Die Reaktion kann durch Zusatz von Stabilisatoren so stark beschleunigt werden, daß sie auch bei Raumtemperatur noch innerhalb von akzeptablen Zeiten abläuft. So ist es z. B. möglich, die Reaktion von Carbonsäureanhydridgruppen mit Alkoholgruppen durch heteroaromatische Amine, die weitere Heteroatome im Ring enthalten, stark zu beschleunigen. Derartige Katalysatoren sind: Derivate von Pyrrol, Indolizin, Indol, Isoindol, Benzotriazol, Carbazol, Pyrazol, Imidazol, Oxazol, Isooxazol, Isothiazol, Triazol, Tetrazol, Thiazole, Pydridin, Chinolin, Isochinolin, Acridin, Phenantridin, Pyridazine, Pyrimidine, Pyrazin, Triazine und Verbindungen, die entsprechende Strukturelemente enthalten. Besonders geeignet sind 1-Methylimidazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidino-pyridin, 4-Morpholino-pyridin, 4-Methylpyridin.

Das Ende der Polyreaktion ergibt sich also aus der Berechnung aufgrund der mittleren Funktionalität der Fette und Öle einerseits und der Funktionalität der damit umgesetzten Verbindung B sowie aus dem Mischungsverhältnis dieser beiden Reaktanten. Praktischer als diese Abschätzung durch Berechnung ist allerdings ein Reihenversuch mit zunehmender Konzentration der Verbindung B bzw. zunehmender Reaktionszeit. So erhält man schnell und sicher Auskunft über die Lage des jeweiligen Gelpunktes, ab dem keine thermoplastische Verarbeitung mit entsprechendem Erweichungsintervall mehr vorliegt.

Vorzugsweise sind die Reaktionsprodukte folgendermaßen aufgebaut, wobei anstelle der beschriebenen di-funktionellen Verbindungen ganz allgemein poly-funktionelle Verbindungen eingesetzt werden können mit 1 bis 10, vorzugsweise 1,5 bis 6 funktionellen Gruppen.

### 1.) Reaktionsprodukte auf Basis von Fett- bzw. Ölepoxiden.

Die Herstellung typischer fettchemischer Epoxide und die dazu geeigneten Öle und Fette sind in der DE 43 05 309 beschrieben bzw. wird dort darauf verwiesen. Die Fett- bzw. Ölepoxide können sowohl teil- als auch vollepoxidiert vorliegen. Die bevorzugte Funktionalität der epoxidringöffnenden Umsetzungsprodukte ist 1,5 bis 5,0, insbesondere zwei, wobei Diole, Diamine und Dicarbonsäuren zur Ringöffnung besonders geeignet sind. Um das Molekulargewicht zu steuern bzw. eine Epoxidringöffnung mit sich selbst einzuleiten, können auch in untergeordnetem Maße monofunktionelle Amine, Alkohole und Carbonsäuren hinzugefügt werden. Fett- bzw. Ölepoxide werden mit mehrwertigen Alkoholen, Aminen, Aminoalkoholen, Mercaptanen, Aminomercaptanen, Alkoholmercaptanen, Carbonsäuren, Aminosäuren, Hydroxysäuren, Mercaptansäuren usw. ringgeöffnet. Es können aber auch alle Diamine und Diole, die zur Herstellung von Polyurethanen geeignet sind, eingesetzt werden. Dicarbonsäuren, auch höhermolekulare wie z.B. Dimerfettsäure sind ebenfalls geeignet, mit den fettchemischen Epoxiden zu reagieren. Die durch die Ringöffnung entstandenen OH-Gruppen bzw. die sonstigen OH- oder NH2-Gruppen können auch noch mit Polyisocyanaten, insbesondere Diisocyanaten umgesetzt werden. Die Reaktion von Isocyanaten mit Aminen und Alkoholgruppen, die sich an den derivatisierten bzw. polymerisierten Fett- und Öl-molekülen befinden, kann auch nach der Dispergierung in Wasser erfolgen. Härtung mit Radikalstartern wie Dibenzoylperoxid ist ebenfalls möglich. Sowohl wasserunlösliche als auch wasserdispergierbare Isocyanate sind für eine solche nachträgliche Vernetzung geeignet.

### 2.) Reaktionsprodukte auf Basis von OH- und NH2-Gruppen an Fetten und Ölen

Fett- und Ölderivate mit funktionellen OH- und NH2-Gruppen - wie z.B. Rizinusöl, die Umsetzungsprodukte fettchemischer Epoxide mit Monoalkoholen oder Monoaminen - können mit reaktiven multifunktionellen - insbesondere difunktionellen Molekülen wie z.B. Säureanhydride, Diisocyanate, Diepoxide und Di-Säurechloride - zu Polymeren umgesetzt werden, wobei die Anzahl der funktionellen Gruppen 1,5 bis 5 betragen soll.
Es sind dafür alle aliphatischen und aromatischen, insbesondere difunktionelle Isocyanate und daraus hergestellte NCO-endständige kurzkettige Prepolymere (Mn : <20 000, insbesondere <8000) geeignet. Auch hier kann wie unter 1.) beschrieben eine nachträgliche Umsetzung der Dispersionen mit Polyisocyanaten erfolgen.

Als Diepoxide sind insbesondere die Vertreter interessant, die für 2-komponentige Reaktionsklebstoffe bzw. Beschichtungen eingesetzt werden.
Geeignete Säureanhydride sind z.B. die gesättigten und ungesättigten Typen, die bei der Polyester- und Polyamidsynthese benutzt werden.

### 3.) Reaktionsprodukte auf Basis von ungesättigten Fetten und Ölen mit Säureanhydridgruppen

Ungesättigte Fette und Öle lassen sich mit Säureanhydriden, insbesondere mit Maleinsäureanhydrid bei erhöhter Temperatur pfropfen. Derartige Umsetzungen sind in der DE 43 05 397 z.B. an Rüböl oder Sojaöl beschrieben. Die mit Säureanhydridgruppen versehenen Fett- und Ölmoleküle lassen sich mit den schon erwähnten, insbesondere difunktionellen Verbindungen, wie z.B. Diamine, Dialkohole (Diole), Aminoalkohole und deren Mercaptanvarianten zu polymeren Molekülen umsetzen. Auch hier bestimmt die Stöchiometrie, abhängig von der Funktionalität der Fett- bzw. Ölmoleküle, letztendlich also wieviele Säureanhydridgruppen im Mittel an einem Triglyceridmolekül gebunden sind, die Auffindung und Unterschreitung des Gelpunktes.

Es ist aber auch möglich, Fettstoffe mit C=C-Doppelbindungen zunächst mit Dienophilen wie z. B. Maleinsäureanhydrid, Methacrylsäure und Acrylsäure umzusetzen und dann mit Polyaminen, Polyolen oder Aminoalkoholen weiter reagieren zu lassen, wobei die Anzahl der funktionellen Gruppen durchschnittlich vorzugsweise 1,5 bis 5 betragen soll.

Vor der Pfropfung oder Anlagerung ist es unter Umständen zweckmäßig, die Fettstoffe mit C=C-Doppelbindungen in Gegenwart von Sauerstoff, Radikalstartern oder bei erhöhter Temperatur umzusetzen. Das kann sowohl bei Abwesenheit als vor allem auch in Gegenwart von radikalisch polymerisierbaren Verbindungen mit olef - nischen C=C-Doppelbindungen geschehen, insbesondere in Gegenwart von mindestens einem der folgenden Monomere: Styrol, Vinylester, Vinylchlorid, Butadien, Ethylen, Acrylsäure, (Meth)acrylsäureester, Crotonsäure, Acrylnitril oder Gemischen dieser Monomere.

Die Reaktionen können in Lösung, in Dispersion oder in der Schmelze durchgeführt werden. Welche Form am zweckmäßigsten ist, hängt vor allem davon ab, wofür das Bindemittel verwendet werden soll. Im allgemeinen ist es jedoch vorteilhaft, die Reaktion in der Schmelze durchzuführen und das Reaktionsprodukt dann in eine wäßrige Dispersion zu überführen.

Die Dispersion wird im allgemeinen folgendermaßen hergestellt: Die Polymere werden auf 50 °C bis 150 °C, bevorzugt auf 80 °C bis 130 °C erhitzt und dann in Wasser unter hoher Scherenergie dispergiert, wobei auch umgekehrt das Wasser in die Schmelze eingebracht werden kann. Vor der Dispergierung können andere Zusatzstoffe wie z.B. Polymere, Weichmacher, Harze, Alterungsschutzmittel usw. bis max. 50 %, bevorzugt bis max. 30 % zugegeben werden. Es kann je nach Viskosität der Schmelze vorteilhaft sein, das Wasser ebenfalls auf etwa die Temperatur der Schmelze zu erhitzen. Bei Mischtemperaturen oberhalb 95 bis 100 °C ist eine Druckemulgierung erforderlich.

Zur Dispergierung notwendig sind Emulgatoren, die entweder zugesetzt werden (äußere Emulgatoren, wie z. B. Niotenside und Ethersulfonsäuren sowie Ethercarbonsäuren) oder schon im Polymeren miteingebaut sind (innere Emulgatoren). Innere Emulgatoren können z.B. mit NaOH oder Aminen neutralisierte COOH-Gruppen (anionische Dispersion) sein, die z.B. bei der Herstellmethode 3.) der Polymeren seitenständig vorhanden sind. Auch durch Säuren protonierte oder alkylierte Amingruppen in den Polymerketten (kationische Dispersion) können die Funktion der inneren Emulgierung bewirken. Äußere Emulgatoren können sowohl niedermolekulare Verbindungen als auch Polymere sein. Dem Fachmann sind solche Emulgatoren bzw. Tenside bekannt und in zahlreichen Nachschlagewerken zugänglich (z.B. Tensid-Taschenbuch, Dr. Helmut Stache, 2. Auflage, 1981, Carl Hanser-Verlag, München-Wien, insbesondere Seiten 771 bis 978). Des weiteren können auch ionische oder nichtionische stabilisierte Polymerdispersionen (z.B. Acrylate oder Polyurethane) als Emulgatoren zugesetzt werden, wobei bekanntermaßen die emulgierende Wirkung mit größerer Hydrophilie zunimmt. Schutzkolloide, wie sie bei der Herstellung von Polymerdispersionen (z.B. Polyvinylacetat) mitverwendet werden (z.B. Stärke, Stärkederivate, Cellulosederivate, Polyvinylalkohole usw.) können ebenfalls zugegeben werden.

Es werden also Dispersionen erhalten, in denen das Reaktionsprodukt in Wasser fein verteilt ist. Es kann so fein verteilt sein, daß die Dispersion klar aussieht (molekular- oder kolloidaldispers). In der Regel ist die Dispersion aber trüb.

Nach der Dispergierung wird zweckmäßigerweise das Molekulargewicht des Reaktionsproduktes erhöht, wozu die bekannten Härter und/oder Starter eingesetzt werden. Dabei ist auch eine leichte Vernetzung möglich. Jedoch sollte eine Quellbarkeit noch gewährleistet sein.

Bei den erhaltenen fettchemischen Makromolekülen sind die Bausteine kovalent miteinander verbunden. Daraus ergeben sich völlig andere anwendungstechnische Eigenschaften als bei den bekannten lonomeren auf der Basis von Fetten und Ölen. Das gilt insbesondere bezüglich der Wärmestandfestigkeit bzw. des temperaturabhängigen Festigkeits- und Fließverhaltens oder bezüglich des Verhaltens gegenüber Wasser. Die Bindemittel führen trotz des hohen Anteils von Fettstoffen zu Verklebungen, die zumindest die Festigkeit von Haftklebstoffen haben. Sie müssen jedoch nicht permanent-klebrig sein.

Die Bindemittel eignen sich daher zum Beschichten, Dichten, Gießen und Binden, insbesondere zum Kleben oder zum Binden von anorganischen Formulierungen wie Zement und Gips.

Je nach konkretem Verwendungszweck werden dem Bindemittel zur Herstellung von Klebstoffen, Gießharzen, Dichtungsmassen oder Beschichtungsmitteln zweckmäßigerweise Zusatzstoffe hinzugefügt, z.B. Wachse, Füllstoffe, Pigmente, Dispergatoren, Stabilisatoren, Viskositätsregler, Konservierungsmittel, Lösungsmittel und Harze. Sie sind bekannt, ebenso ihre Zumischung.

Die Bindemittel können aber auch handelsüblichen Polymerdispersionen oder Leimen hinzugefügt werden, und zwar mit einem Anteil von 2 bis 90, insbesondere bis 50 Gew.-%, bezogen auf das bindende Polymer in der Polymerdispersion oder in dem Leim. Die Polymerdispersionen und die Leime basieren auf den üblichen Polymeren, wie Casein, Glutin, Celluloseether, Stärke, Dextrin, Polyvinylpyrrolidon, Polyvinylalkohol, Polymethacrylaten, Polyvinylchlorid, Polybutadien, Polystyrol, Styrol/Acrylat-Copolymere, Styrol/Butadien-Copolymere, Polyvinylester und Polyurethane. Diese Polymerdispersionen und Leime haben einen Festkörpergehalt von 20 bis 80 Gew.-%.

Der Fachmann kennt die Regeln, die über die Verträglichkeit derartiger Abmischungen entscheiden. So sind z.B. kationisch und anionisch stabilisierte Dispersionen meist nicht verträglich und eine starke pH-Wert-Verschiebung kann ebenfalls zur Koagulation einer Dispersion oder der Dispersionsmischung führen. Nichtionisch stabilisierte Dispersionen sind normalerweise gegen pH-Wert-Schwankungen und lonenzusatz am unempfindlichsten.

Aufgrund der Eigenschaften der Bindemittel eignen sie sich zur Herstellung von Klebstoffen, klebenden Dichtungsmassen, klebenden Gießharzen und Beschichtungsmassen, insbesondere dann, wenn es auf Spitzenwerte bei den Festigkeiten weniger ankommt als auf ein preiswertes Mittel. Insbesondere eignen sie sich für Substrate mit unterschiedlichem elastischem Verhalten oder unterschiedlichen Wärmeausdehnungskoeffizienten, was in der Regel bei unterschiedlichen Substraten der Fall ist. Als Substrate kommen in Frage: Holz, Pappe, Papier, Wandbeläge, wie Tapeten, Kork, Leder, Gummi, Filz, Textilien, Kunststoffe - insbesondere Bodenbeläge aus PVC, Linoleum und Polyolefinen, sei es in Form von Folien oder textilen Flächengebilden -, mineralische Substrate, wie Glas, Quarz, Schlacken, Gestein und Keramik sowie Metalle.

Die Bindemittel eignen sich insbesondere zur Herstellung von Dispersions-Klebstoffen, Haftklebstoffen und Kontaktklebstoffen. Besonders eignen sie sich auch als Fugendichtungsmasse, als Beschichtungsmittel für harte Substrate ebenso wie für Textilien und Papier.

Die Erfindung wird durch folgende Beispiele erläutert:

### Beispiele

### Beispiel I

50 g des Umsetzungsproduktes von 1 Mol Sojaöl mit 3 Mol Maleinsäureanhydrid (bei 240 °C unter Stickstoff 6 Std. gerührt und anschließend destilliert) werden bei 80 °C mit 29 g Jeffamin D 2000 (aminendständiges Polypropylenglykol mit Mn 2000) versetzt, wobei der Jeffamin-Anteil innerhalb von 10 Minuten zugetropft wird. Die Temperatur der hochviskosen Mischung wird auf 100 °C angehoben und 47,7 g Wasser, das 3,8 g Natronlauge enthält und auf 50 °C vortemperiert wird, schnell unter starker Durchmischung zugegeben. Nach Abkühlung innerhalb von 20 Minuten auf Raumtemperatur entsteht eine stark haftklebrige, transparent bis opake Dispersion mit einer Viskosität von 10 000 mPas und einem Festkörpergehalt von 65 %. Die Dispersion hat einen pH-Wert von 7,5 und ist mindestens 3 Monate lagerstabil.

### Beispiel II

Die Herstellung erfolgt analog zu Beispiel I (6 Std. bei 200 °C und dann 4 Std. bei 220 °C unter Stickstoff gerührt, ohne Destillation), wobei die 29 g Jeffamin 2000 durch die entsprechende äquimolare Menge an Isophorondiamin ersetzt werden und die zur Neutralisation bei der Dispergierung verwendete Natronlaugemenge konstant bleibt. Es entsteht eine Dispersion mit 50 % Festkörpergehalt, mit einem pH-Wert von 7,6. Sie ergibt einen schwach haftklebrigen Film, der transparent auftrocknet.

### Beispiel III

50 g Des Umsetzungsproduktes von 1 Mol Sojaöl mit 2 Mol Maleinsäureanhydrid werden mit 8,6 g Polydiol 200 (Polyethylenglykol mit einem Molekulargewicht Mn von 200) 1 Stunde unter Rühren bei ca. 150 °C zur Reaktion gebracht. Danach wird die Temperatur der Mischung auf 90 °C abgesenkt und 65 g Wasser, das 4,6 g Natronlauge enthält und auf 50 °C vortemperiert wird, schnell unter starker Durchmischung zugegeben. Nach Abkühlung auf RT entsteht eine klebrige transparente Dispersion mit einem Festkörpergehalt von 50 %.
Die Dispersion ist mindestens 6 Monate lagerstabil.

### Beispiel IV

Die Herstellung erfolgt analog zu Beispiel III, wobei 50 g des Umsetzungsproduktes von 1 Mol Sojaöl mit 2 Mol Maleinsäureanhydrid mit 12,7 g Polytetrahydrofuran 2000 (Mn = 2000) umgesetzt werden. Zur Dispergierung werden 65 g Wasser sowie 5,1 g Natronlauge verwendet. Es entsteht eine transparente Dispersion mit 50 % Festkörpergehalt. Sie ergibt einen haftklebrigen Film der transparent auftrocknet. Die Lagerstabilität beträgt mindestens 6 Monate.

### Beispiel V

Die Herstellung erfolgt analog zu Beispiel III, wobei 50 g des Umsetzungsproduktes von 1 Mol Sojaöl mit 2 Mol Maleinsäureanhydrid mit 8,6 g Polydiol 600 (Polyethylenglykol mit Mn = 600) umgesetzt werden. Zur Dispergierung werden 68 g Wasser und 8,0 G Natronlauge verwendet. Es entsteht eine transparente Dispersion mit 50 % Festkörpergehalt. Sie ergibt einen klebrigen Film, der transparent auftrocknet.
Die Lagerstabilität beträgt mindestens 6 Monate.

### Beispiel VI

Sojaölepoxid wird mit Dimerfettsäure im Molverhältnis 1 : 1 ringgeöffnet (bei 160 °C 1 Std. gerührt). 40 g dieses fettchemischen Umsetzungsproduktes werden bei 90 °C mit 124 g Wasser, das 3,3 g Natronlauge enthält und auf 90 °C vortemperiert wird, unter starker Durchmischung dispergiert.
Nach Abkühlung auf 20 °C entsteht eine dünnflüssige, milchige Dispersion mit einem Festkörpergehalt von 25 %. Sie ergibt einen transparenten, leicht klebrigen Film. Die Lagerstabilität beträgt mindestens 6 Monate.

### Beispiel VII

Ricinusöl wird mit Phthalsäureanhydrid im Molverhältnis 1 : 2 umgesetzt (bei 140 °C unter Stickstoff 2 Std. gerührt). 40 g dieses Reaktionsproduktes werden bei 90 °C mit 100 g Wasser, das 5,2 g Natronlauge enthält und auf 90 °C vortemperiert wird, unter starker Durchmischung dispergiert. Nach Abkühlung auf RT entsteht eine mittelviskose, milchige Dispersion mit einem Festkörpergehalt von 31 %. Sie ergibt einen transparenten, leicht klebrigen Film.
Die Lagerstabilität beträgt mindestens 6 Monate.

### Beispiel VIII

278,3 g eines Addukts von Sojaöl mit Maleinsäureanhydrid (MSA) im Molverhältnis 1 : 2 werden mit 188,1 g partiell dehydratisiertem Ricinusöl mit einer OHZ = 120 unter Rühren 1,5 h auf 150 - 160 °C erhitzt. Nach Abkühlen auf 90 - 95 °C wird unter starkem Rühren eine Lösung von 3,26 g 50%ige NaOH in 20 g heißem Wasser (90 °C) zugegeben. Dann werden langsam weitere 480,1 g heißes Wasser zugegeben. Nach der unter Rühren erfolgten Abkühlung auf Raumtemperatur erhält man 1 000 g einer Dispersion, die zu einem stark klebrigen Film trocknet.

### Beispiel IX

268,1 g partiell dehydratisiertes Ricinusöl (OHZ = 120), 40,2 g Desmodur 44 V 10 (technisches Methylendiphenyldiisocyanat) und 61,7 g Eumulgin KP 92 (Fettsäuregemisch mit 9,2 EO) werden 2 h auf 50 °C erwärmt. Dann werden langsam unter Rühren 630 g warmen Wassers (60 °C) zugegeben. Man läßt auf Raumtemperatur abkühlen und erhält ca. 1 000 g einer beigefarbenen Dispersion.

### Beispiel X

Umsetzung von Poyvest C 150 (Polycarbonsäureanhydrid aus Butadien, Maleinsäureanhydrid und Bernsteinsäureanhydrid der Fa. Hüls) mit einem Polyester/Polyetherpolyol (Umsetzungsprodukt von Sojaölepoxid und Methanol im Verhältnis 1 : 6, hergestellt im Zutropfverfahren mit 1 Std. Nachreaktion von der Fa. Henkel)
Katalysator: N-Methylimidazol
Komponente A: Polyvest C 150
Komponente B: Polyester/Polyether-Polyol
Reaktions-Temperatur: 20 °C

| Masse A [g] | Masse B [g] | Kat. Gew.-% | | Reaktionsdauer [Tage] | |
|---|---|---|---|---|---|
| | | | 1 | 2 | 5 |
| | | | | | |
| 30 | 23 | - | Mischung bleibt dickflüssig | | |
| | | | | | |
| 30 | 23 | 1 | weich klebrig | gummiart. klebrig | durchgehärtet gummiartig |
| | | | | | |
| 40 | 15 | 1 | weich klebrig | gummiart. klebefrei | durchgehärtet gummiartig |
| | | | | | |
| 30 | 15 | 1 | weich klebrig | gummiart. klebrig | durchgehärtet gummiartig |

### Beispiel XI

Umsetzung eines Reaktionsproduktes von Sojaöl und Maleinsäureanhydrid (100 g Öl : 30 g MSA, Komponente A) mit Glycerin + 5 E0 (Komponente B) bei 20 °C
Katalysator: N-Methylimidazol

| Masse A [g] | Masse B [g] | Kat. Gew.-% | | Reaktionsdauer [Std.] | |
|---|---|---|---|---|---|
| | | | 1 | 2 | 5 |
| | | | | | |
| 20 | 4 | - | Mischung bleibt dickflüssig | | |
| | | | | | |
| 20 | 4 | 1.4 | gummiart. klebrig | gummiart. klebefrei | durchgehärtet gummiartig |

### Beispiel XII

Umsetzung eines Reaktionsprodukts von Leinöl und Maleinsäureanhydrid (100 g Öl : 20 g MSA, Komponente A) mit Glycerin + 30 E0 (Komponente B)
Katalysator: 1.6 Gew.-% N-Methylimidazol
Komponente A: 10 g
Komponente B: 8 g
leicht klebrig nach 60 min
durchgehärtet nach 10 h

### Beispiel XIII

Umsetzung eines Reaktionsprodukts von Leinöl und Maleinsäureanhydrid (100 g Öl : 30 g MSA, Komponente A) mit Glycerin + 30 E0 (Komponente B)
Katalysator: 1.4 Gew.-% N-Methylimidazol
Komponente A: 10 g
Komponente B: 10.8 g
oberflächentrocken nach 30 min
durchgehärtet nach 3 h

Die fettchemischen Reaktionsprodukte der Beispiel X bis XIII eignen sich zur Verwendung als klebriges Gießharz, welches sogar bei Raumtemperatur aushärtet.

## Patentansprüche

1. Verwendung eines Reaktionsproduktes von
A) mindestens einem Fettstoff mit durchschnittlich 1 bis 10 mindestens einer der folgenden funktionellen Gruppen -OH, -COOH, -SH, -NH2, -C = C-, Epoxidgruppe oder Säureanhydrid-gruppe in dem Fettrest, wobei der Fettstoff mindestens 1 Mol-% an mindestens 3-funktionellen Fettstoffmolekülen enthält, mit
B) mindestens einer ein- oder mehrfunktionellen Verbindung, die zur Reaktion mit den funktionellen Gruppen der Fettstoffe unter Bildung von kovalenten Bindungen fähig ist.
mit einem Molekulargewicht von mindestens 1500 als Bindemittel in einer wäßrigen Dispersion.

2. Verwendung nach Anspruch 1, **dadurch gekennzeichnet, daß** mindestens eine Substanz aus der folgenden Gruppe der Fettstoffe eingesetzt wird: gesättigte, ungesättigte, unverzweigte oder verzweigte Fettsäuren, Fettalkohle mit mindestens 8 C-Atomen oder deren Ester, insbesondere Triglyceride von hohen Fettsäuren, vorzugsweise natürliche Fette und Öle, sowohl in nativer Form als auch nach thermischer und/oder oxidativer Behandlung bzw. Epoxidation oder nach Addition von Nucleophilen, wobei die Fettstoffe ein Molekulargewicht von > 200 haben.

3. Verwendung nach Anspruch 1 oder 2, **dadurch gekennzeichnet, daß** die Fettstoffe ein Molekulargewicht von > 300 haben.

4. Verwendung nach Anspruch 1, 2 oder 3, **gekennzeichnet durch** das Molekulargewicht der funktionellen Verbindung B) von weniger als 20000.

5. Verwendung nach mindestens einem der Ansprüche 1 bis 4, **gekennzeichnet durch** Fettstoffe mit Epoxidgruppen sowie **durch** folgende mehrfunktionelle Verbindungen B): Polyole, Polyamine, Aminoalkohole und Polycarbonsäuren, wobei die Anzahl der funktionellen Gruppen durchschnittlich 1,5 bis 5 betragen soll.

6. Verwendung nach mindestens einem der Ansprüche 1 bis 4, **gekennzeichnet durch** Fettstoffe mit OH- und/oder NH2-Gruppen sowie **durch** folgende mehrfunktionelle Verbindungen B) Polycarbonsäureanhydride, Polyisocyanate, Polyepoxide und/oder Polycarbonsäurechloride, wobei die Anzahl der funktionellen Gruppen durchschnittlich 1,5 bis 5 betragen soll.

7. Verwendung nach mindestens einem der Ansprüche 1 bis 4, **gekennzeichnet durch** Fettstoffe mit C=C-Doppelbindungen, die zunächst mit Dienophilen wie z.B. Maleinsäureanhydrid, Methacrylsäure und Acrylsäure umgesetzt wurden, und dann mit Polyaminen, Polyolen oder Aminoalkoholen weiter reagierten, wobei die Anzahl der funktionellen Gruppen durchschnittlich vorzugsweise 1,5 bis 5 betragen soll.

8. Verwendung nach mindestens einem der Ansprüche 1 bis 4, **dadurch gekennzeichnet, daß** die Fettstoffe mit C=C-Doppelbindungen in Gegenwart von Sauerstoff, Radikalstartern oder bei erhöhter Temperatur umgesetzt wurden.

9. Verwendung nach mindestens einem der Ansprüche 1 bis 4 und 8, **gekennzeichnet durch** Fettstoffe mit C=C-Doppelbindungen, die in Gegenwart von radikalisch polymerisierbaren Verbindungen mit olefinischen C=C-Doppelbindungen umgesetzt wurden.

10. Verwendung nach mindestens einem der Ansprüche 1 bis 9, **dadurch gekennzeichnet, daß** die Dispersion dadurch hergestellt wurde, daß man das Reaktionsprodukt im flüssigen Zustand - eventuell nach Erwärmung auf 50 bis 150 °C - in Wasser bzw. umgekehrt das Wasser im Reaktionsprodukt dispergiert.

11. Verwendung nach Anspruch 10, **dadurch gekennzeichnet, daß** man nach der Dispergierung das Molekulargewicht der Reaktionsprodukte erhöht.

12. Verwendung der Bindemittel nach mindestens einem der vorangegangenen Ansprüche zum Beschichten, Dichten, Gießen und Binden.

13. Verwendung nach Anspruch 12, **gekennzeichnet durch** Polymerdispersionen und Leime auf der Basis von Casein, Glutin, Celluloseether, Stärke, Dextrin, Polyvinylpyrrolidon, Polyvinylalkohol, Polymethacrylaten, Polyvinylchlorid, Polybutadien, Polystyrol, Styrol/Acrylat-Copolymere, Styrol/Butadien-Copolymere, Polyvinylester und Polyurethanen, und zwar mit einem Festkörpergehalt von 20 bis 80 Gew.-%.

14. Verwendung der Dispersion nach mindestens einem der Ansprüche 12 oder 13, **dadurch gekennzeichnet, daß** der Klebstoff eine Klebstoff-Dispersion, ein Kontaktklebstoff, ein Haftklebstoff, ein Alleskleber ist, daß die Dichtungsmasse eine Fugendichtmasse ist und daß Substrate mit harten Oberflächen sowie Textilien und Papier beschichtet werden.

15. Verwendung nach mindestens einem der Ansprüche 12 bis 14, **gekennzeichnet durch** das Kleben, Beschichten und Dichten von Holz, Pappe, Papier, Wandbelägen wie Tapeten, Kork, Leder, Gummi, Filz, Textilien, Kunststoffe, mineralischen Substraten wie Glas, Quarz, Schlacken, Gestein und Keramik sowie Metalle.

## Claims

1. The use of a reaction product of
A) at least one fatty compound containing on average 1 to 10 of at least one of the following functional groups -OH, -COOH, -SH, -NH₂, -C=C-, epoxide or anhydride group in the fatty component, the fatty compound containing at least 1 mole-% of at least trifunctional fatty molecules, with
B) at least one mono- or polyfunctional compound capable of reacting with the functional groups of the fatty compounds to form covalent bonds,
with a molecular weight of at least 1,500 as binders in an aqueous dispersion.

2. The use claimed in claim 1, **characterized in that** at least one substance from the following group of fatty compounds is used: saturated, unsaturated, unbranched or branched fatty acids, fatty alcohols containing at least 8 carbon atoms or esters thereof, more particularly triglycerides of high fatty acids, preferably natural fats and oils, both in native form and after thermal and/or oxidative treatment or epoxidation or after addition of nucleophiles, the fatty compounds having a molecular weight of > 200.

3. The use claimed in claim 1 or 2, **characterized in that** the fatty compounds have a molecular weight of > 300.

4. The use claimed in claim 1, 2 or 3, **characterized by** a molecular weight of the functional compound B) of less than 20,000.

5. The use claimed in at least one of claims 1 to 4, **characterized by** fatty compounds containing epoxide groups and by the following polyfunctional compounds B): polyols, polyamines, aminoalcohols and polycarboxylic acids, the average number of functional groups having to be 1.5 to 5.

6. The use claimed in at least one of claims 1 to 4, **characterized by** fatty compounds containing OH and/or NH₂ groups and by the following polyfunctional compounds B): polycarboxylic anhydrides, polyisocyanates, polyepoxides and/or polycarboxylic acid chlorides, the average number of functional groups having to be 1.5 to 5.

7. The use claimed in at least one of claims 1 to 4, **characterized by** fatty compounds containing C=C double bonds which were first reacted with dienophiles such as, for example, maleic anhydride, methacrylic acid and acrylic acid and then further reacted with polyamines, polyols or aminoalcohols, the average number of functional groups having to be 1.5 to 5.

8. The use claimed in at least one of claims 1 to 4, **characterized in that** the fatty compounds containing C=C double bonds were reacted in the presence of oxygen, radical initiators or at elevated temperature.

9. The use claimed in at least one of claims 1 to 4 and 8, **characterized by** fatty compounds containing C=C double bonds which were reacted in the presence of radical-polymerizable compounds containing olefinic C=C double bonds

10. The use claimed in at least one of claims 1 to 9, **characterized in that** the dispersion was prepared by dispersing the reaction product in liquid form in water - optionally after heating to 50 - 150EC - or, conversely, water in the reaction product.

11. The use claimed in claim 10, **characterized in that** the molecular weight of the reaction products is increased after dispersion.

12. The use of the binders claimed in at least one of the preceding claims for coating, sealing, casting and binding.

13. The use claimed in claim 12, **characterized by** polymer dispersions and glues based on casein, glutin, cellulose ether, starch, dextrin, polyvinyl pyrrolidone, polyvinyl alcohol, polymethacrylates, polyvinyl chloride, polybutadiene, polystyrene, styrene/acrylate copolymers, styrene/butadiene copolymers, polyvinyl esters and polyurethanes with a solids content of 20 to 80% by weight.

14. The use of the dispersion claimed in at least one of claims 12 or 13, **characterized in that** the adhesive is an adhesive dispersion, a contact adhesive, a pressure-sensitive adhesive, a multipurpose adhesive; **in that** the sealing compound is a jointing compound and **in that** substrates with hard surfaces and also textiles and paper are coated.

15. The use claimed in at least one of claims 12 to 14, **characterized by** the bonding, coating and sealing of wood, paperboard, paper, wall coverings, such as wallpapers, cork, leather, rubber, felt, textiles, plastics, mineral substrates, such as glass, quartz, slags, rock and ceramics and also metals.

## Revendications

1. Utilisation d'un produit de réaction entre
A) au moins une matière grasse ayant en moyenne de 1 à 10 au moins d'un des groupes fonctionnels -OH, -COOH, -SH, -NH₂, -C=C-, un groupe époxyde ou un groupe anhydride d'acide dans le reste gras, dans laquelle la matière grasse contenant au moins 1 % mol de molécules de matière grasse trifonctionnelles, et
B) au moins un composé mono-ou multifonctionnel qui est apte à réagir avec les groupes fonctionnels de la matière grasse en formant formation des liaisons covalentes
ayant un poids moléculaire d'au moins 1500, en tant qu'agent liant dans une dispersion aqueuse.

2. Utilisation selon la revendication 1,
**caractérisée par** la mise en oeuvre
d'au moins une substance appartenant au groupe suivant des matières grasses : acides gras saturés, non saturés, non ramifiés, ou ramifiés, alcools gras ayant au moins 8 atomes de carbone ou leurs esters, en particulier des triglycérides d'acides gras supérieurs, de préférence des graisses et des huiles naturelles aussi bien sous la forme naturelle qu'après traitement thermique et/ou oxydation ou par époxydation ou addition de nucléophiles, les matières grasses ayant un poids moléculaire supérieur à 200.

3. Utilisation selon la revendication 1 ou 2,
**caractérisé en ce que**
les matières grasses ont un poids moléculaire supérieur à 300.

4. Utilisation selon les revendications 1, 2 ou 3,
**caractérisé par**
le poids moléculaire du composé fonctionnel B) inférieur à 20.000.

5. Utilisation selon au moins une des revendications 1 à 4,
**caractérisé par** la présence de matières grasses avec des groupes époxyde ainsi que des composés polyfonctionnels suivants B) : polyols, polyamines, aminoalcools et acides polycarboxyliques dont le nombre de groupes fonctionnels s'éleve en moyenne de 1,5 à 5.

6. Utilisation selon au moins l'une des revendications 1 à 4,
**caractérisée par** la présence de matières grasses ayant des groupes OH et/ou NH₂ ainsi que des composés polyfonctionnels suivants B) : anhydrides d'acide polycarboxylique, polyisocyanates, polyépoxyde et/ou chlorures d'acide polycarboxylique, dont le nombre de groupes fonctionnels s'éleve en moyenne à 1,5 à 5.

7. Utilisation selon au moins l'une des revendications 1 à 4,
**caractérisée par**
la présence de matières grasses ayant des doubles liaisons C = C qui ont réagi en premier lieu avec des diénophiles comme par exemple l'anhydride maléique, l'acide méthacrylique, et l'acide acrylique, et ensuite encore avec des polyamines, des polyols ou des aminoalcools, dont le nombre de groupes fonctionnels s'élève en moyenne de préférence à 1,5 à 5.

8. Utilisation selon au moins l'une des revendications 1 à 4,
**caractérisé en ce que**
les matière grasses ayant des doubles liaisons C = C ayant réagi en présence d'oxygène, de déclencheurs radicalaircs ou par augmentation de la température.

9. Utilisation selon au moins l'une des revendications 1 à 4 et 8,
**caractérisée par**
la présence de matières grasses ayant des doubles liaisons C = C ayant réagi en présence de composés polymérisables par voie radicalaire, avec des double liaisons oléfiniques C = C.

10. Utilisation selon au moins l'une quelconque des revendications 1 à 9,
**caractérisée en ce que**
la dispersion a été préparée par mise en dispersion de produit réactionnel à l'état liquide éventuellement après chauffage à 50 à 150°C, dans l'eau ou inversement l'eau dans le produit réactionnel.

11. Utilisation selon la revendication 10,
**caractérisée en ce qu'**
après la mise en dispersion, on augmente le poids moléculaire du produit réactionnel.

12. Utilisation des agents liants selon au moins l'une des revendications précédentes pour le revêtement, l'étanchéité, la coulée et la prise.

13. Utilisation selon la revendication 12,
**caractérisée par**
des dispersions de polymères et des colles à base de caséine, de glutine, d'éthers de cellulose, d'amidon, de dextrine, de polyvinylpyrrolidone, d'alcool polyvinylique, de polyméthacrylates, de chlorure de polyvinyle, de polybutadiène, de polystyrène, de copolymères styrène/acrylate, de copolymères styrène/butadiène, d'esters polyvinyliques et de polyuréthanes, et ayant une teneur en matières solides allant de 20 à 80 % en poids.

14. Utilisation de la dispersion selon au moins lune des revendications 12 ou 13,
**caractérisée en ce que**
le produit adhésif est une dispersion de colle, une colle par contact, une colle par adhésion, une colle pour tous usages et la masse d'étanchéité est une masse d'étanchéité pour joints et on enduit des substrats ayant des surfaces dures tels que les textiles et le papier.

15. Utilisation selon au moins lune des revendications 12 à 14,
**caractérisé par**
le collage, l'enrobage et l'étanchéité de papier, de carton, de revêtements muraux, comme des papiers peints, du liège, du cuir, du caoutchouc, du feutre, des textiles, des matières plastiques, des substrats minéraux tels que le verre, le quartz, les scories, les pierres et la céramique, ainsi que des métaux.
